Europäisches Patentamt

European Patent Office

Office européen des brevets

(19)

(11) Veröffentlichungsnummer: **0 088 157**
**B1**

(12) **EUROPÄISCHE PATENTSCHRIFT**

(45) Veröffentlichungstag der Patentschrift:
**19.02.86**

(21) Anmeldenummer: **82110511.1**

(22) Anmeldetag: **15.11.82**

(51) Int. Cl.⁴: **F 02 F 1/38,** F 02 F 1/40,
F 01 P 3/02

(54) Zylinderkopf für eine wassergekühlte Brennkraftmaschine.

(30) Priorität: **09.03.82 DE 3208341**

(43) Veröffentlichungstag der Anmeldung:
**14.09.83 Patentblatt 83/37**

(45) Bekanntmachung des Hinweises auf die Patenterteilung:
**19.02.86 Patentblatt 86/8**

(84) Benannte Vertragsstaaten:
**AT DE FR GB**

(56) Entgegenhaltungen:
**DE - A - 1 961 322**
**FR - A - 2 103 065**
**FR - A - 2 225 628**
**FR - A - 2 234 458**
**FR - A - 2 405 360**

(73) Patentinhaber: **Klöckner-Humboldt-Deutz
Aktiengesellschaft,
Deutz-Mülheimer-Strasse 111 Postfach 80 05 09,
D-5000 Köln 80 (DE)**

(72) Erfinder: **Stadler, Hans, Burgstrasse 28, D-5060 Bergisch
Gladbach 3 (DE)**
Erfinder: **Bauer, Lothar, Am Hirschsprung 2,
D-5000 Köln 91 (DE)**
Erfinder: **Strusch, Wolfgang, Friedensstrasse 110,
D-5000 Köln 90 (DE)**

## Beschreibung

Die Erfindung betrifft einen Zylinderkopf in Blockbauweise für mehrere Zylinder einer wassergekühlten Brennkraftmaschine mit indirekter oder direkter Einspritzung gemäss Oberbegriff des Anspruchs 1.

Ein derartiger Zylinderkopf geht aus der FR-A-2 225 628 als bekannt hervor. Aufgrund der Materialanhäufung auf der Zylinderkopfbodenplatte im Zentrumsbereich des Brennraums werden bezüglich der Wärmeübertragung und der Steifigkeit ungünstige Verhältnisse geschaffen. Der durch eine Bohrung zwischen den Ventilen hindurchgeführte Kühlwasserstrom kühlt den thermisch hoch belasteten Ventilstegbereich nur ungenügend, was in diesem Bereich zu Rissbildungen führt. Der zwischen den Ventilen hindurchgeführte Kühlwasserstrom trifft rechtwinklig auf die Wirbelkammer bzw. die Einspritzdüsenpfeife auf und wird zur Zylinderkopfdeckelplatte umgelenkt. Diese Art der Kühlung gewährleistet keine gleichmässige Wärmeabfuhr, so dass im wesentlichen lokal stark gekühlte und lokal schwach gekühlte Bereiche auftreten, wodurch sich erhebliche thermische Probleme, Materialspannungen und Rissbildungen ergeben.

Der Erfindung liegt die Aufgabe zugrunde, einen wassergekühlten Zylinderkopf der eingangs beschriebenen Art derart weiterzubilden, dass eine gleichmässige Kühlung der insbesondere gefährdeten Bereiche erzielt ist, wobei eine gute Giessbarkeit des Blockzylinderkopfs für eine Grossserienfertigung gewährleistet sein soll.

Diese Aufgabe wird erfindungsgemäss dadurch gelöst, dass für jeden Zylinder ein getrennter Hauptwasserübertritt zwischen den Gaswechselkanälen im Bereich deren Mündungsöffnungen auf einer Blockzylinderkopfseitenwand vorgesehen ist. Der Kühlwasserstrom tritt als freier Strahl zwischen dem offenen Ventilstegbereich hindurch und ist aussermittig auf die Wirbelkammer bzw. Einspritzdüsenpfeife gerichtet. Der freie Strahl verläuft annähernd parallel zu der Bodenplatte des Zylinderkopfs genau entlang des Ventilstegbereichs. Auf diese Weise wird eine gezielte Strömung entlang des Ventilstegs erzielt, was eine gleichmässige Wärmeabfuhr gewährleistet. Zumindest ein Teilstrahl des Kühlwasserstroms ist um die Wirbelkammer bzw. Einspritzdüsenpfeife herumgeführt und tritt durch einen zwischen Zylinderkopfbegrenzungswand und Wirbelkammer bzw. Einspritzdüsenpfeife etwa in Höhe der Zylinderkopfbodenblatte angeordneten Durchbruch hindurch. Hinter diesem Durchbruch tritt der Teilstrahl mit dem aus dem Hilfswasserübertritt austretenden Kühlwasser zusammen, wobei für jeden Zylinder ein Hilfswasserübertritt vorgesehen ist. Durch den als freier Strahl aussermittig auf die Wirbelkammer bzw. Einspritzdüsenpfeife auftreffenden Kühlwasserstrom ist um die Wirbelkammer bzw. Einspritzdüsenpfeife ein herumgezogener Wasserkern erzeugt, wobei dieser Wasserkern im Bereich des Hilfswasserübertritts durch eine dachförmige Wand an der vom Zylinderkopf abgewandten Seite begrenzt ist. Durch die erfindungsgemässe Ausgestaltung wird eine gleichmässige Kühlung der Wirbelkammer bzw. der Einspritzdüsenpfeife erzielt, wodurch die thermische Belastung des Zylinderkopfs in diesem Bereich verringert und eine Rissbildung vermieden ist.

In Ausgestaltung der Erfindung werden die Gaswechselkanäle derart steil zur Zylinderkopfdichtungsebene angeordnet, dass jeweils zwischen einem Einlasskanal und dem entsprechenden, annähernd waagerecht angeordneten Auslasskanal ein vom Querschnitt ausreichend bemessener Raum zur Aufnahme eines gegossenen oder gebohrten Ölrücklaufkanals gegeben ist. Die Ölrücklaufkanäle sind schräg angeordnet und tangential an die Auslasskanäle angebunden, wobei die Auslasskanäle mit Ausnahme der kurzen tangentialen Anbindung an ihrer gesamten Oberfläche von Kühlwasser umspült sind. Auf diese Weise kann für jeden Zylinder ein eigener Ölrücklaufkanal vorgesehen werden, wodurch die Rückführung des zur Schmierung des Ventiltriebs erforderlichen Öls vom Zylinderkopf zum Kurbelgehäuse verbessert ist. Eine derartige Ausgestaltung ist besonders wichtig, wenn unter den Ventilfedern angeordnete Ventildrehvorrichtungen zur Anwendung kommen, da diese zur einwandfreien Funktion nicht im Öl stehen dürfen.

Die bei bekannten Zylinderköpfen als nachteilig empfundene Schwächung der über der Zylinderkopfdichtung stehenden Zylinderkopfbegrenzungswand, die durch die Verlegung von Ein- und Auslasskanälen auf eine Zylinderkopfseite hervorgerufen wird, wird bei dem erfindungsgemässen Zylinderkopf dadurch kompensiert, dass die an die Auslasskanäle angebundenen Ölrücklaufkänale mit den Hauptwasserübertritten derart verbunden sind, dass sie jeweils eine Einheit bilden. Diese Einheit übernimmt Abstützfunktionen und leitet die auf die Zylinderkopfbodenplatte wirkenden Gaskräfte in Richtung der Zylinderkopfschrauben bzw. Zylinderkopfschraubenpfeifen ab.

Um eine gute Wärmeabfuhr zu erzielen, sind zwischen den Ölrücklaufkänalen und den Zylinderkopfschraubenpfeifen einerseits und der Blockzylinderkopfseitenwand andererseits wasserdurchströmte Zwischenräume vorgesehen, die durch zusätzliche auf der Seite der Hauptwasserübertritte angeordnete Hilfswasserübertritte mit Kühlwasser beschickt werden.

Die Abführung des Öls vom Zylinderkopf zum Kurbelgehäuse wird unterstützt, wenn die geneigten Einlasskanäle so weit in den Ventilfeder- und Stösselraum hineinragen, dass sie diesen in Einzelräume unterteilen. Das Öl wird auf diese Weise den Ölrücklaufkanälen trichterartig zugeführt.

An den Zylinderkopf sind vorteilhaft Lagerböcke für eine obenliegende Nockenwelle angegossen. Die Ölversorgung der Lager sowie des Ventiltriebs erfolgt über in den Lagerböcken angeordnete separate Ölversorgungsbohrungen, über die vorteilhaft benachbarte mechanische oder hydraulische Tassenstössel ebenfalls mit Schmierstoff versorgt sind.

Zur Erzielung einer höheren Pressung an den Brennraumeinfassungen und gleichzeitig einer gleichmässigeren Pressungsverteilung sind die Schraubenpfeifen der Zylinderkopfschrauben auf der Einspritzseite des Zylinderkopfs an der Zylinderkopfbodenplatte mit Ausnehmungen versehen, während die Schraubenpfeifen der Zylinderkopfschrauben auf der Seite der Gaswechselkanäle zur Zylinderkopfbodenplatte hin im Wasserraum kegelförmig erweitert sind. Zwischen den Zylindern ist die Zylinderkopfbodenplatte im Wasserraum jeweils durch eine Rippe bzw. einen Wulst versteift, die bzw. der gleichförmig an sich gegenüberliegenden Zylinderkopfschraubenpfeifen anwächst, wodurch eine höhere Festigkeit des Zylinderkopfs in Querrichtung erzielt ist.

Zur besseren Anpassung an den Zylinderkopf sind im Ventilfeder- und Stösselraum zwischen den einzelnen Zylindern quer zum Zylinderkopf verlaufende Ausgleichsfalten vorgesehen. Durch diese Ausgleichsfalten wird die Nachgiebigkeit des Zylinderkopfs, insbesondere seine Biegesteifigkeit in Längsrichtung verringert, wodurch ein verbessertes Dichtungsverhalten erzielt ist.

In weiterer Ausgestaltung der Erfindung können funktionell oder giesstechnisch bedingte Öffnungen im Bereich des Wasserraums, z.B. Thermostatanschluss, Öffnungen für Kernstutzen oder Putzöffnungen usw., Randwülste aufweisen, die vorteilhaft so gestaltet sind, dass sie als Widerlager für Spannpratzen einer Düsenhalterbefestigung dienen. Durch diese Massnahme können zusätzliche, besondere Abstützelemente entfallen.

Zur näheren Erläuterung der Erfindung wird auf die Zeichnungen verwiesen, in denen ein Ausführungsbeispiel eines Zylinderkopfs gemäss der Erfindung dargestellt ist.

Es zeigen:

Fig. 1 eine Schnittansicht eines erfindungsgemässen Zylinderkopfs gemäss A-A in Fig. 2,

Fig. 2 eine Schnittansicht gemäss B-B in Fig. 1,

Fig. 3 eine Schnittansicht gemäss C-C in Fig. 1,

Fig. 4 eine Schnittansicht gemäss D-D in Fig. 1,

Fig. 5 eine Schnittansicht gemäss E-E in Fig. 1,

Fig. 6 eine Schnittansicht gemäss F-F in Fig. 1.

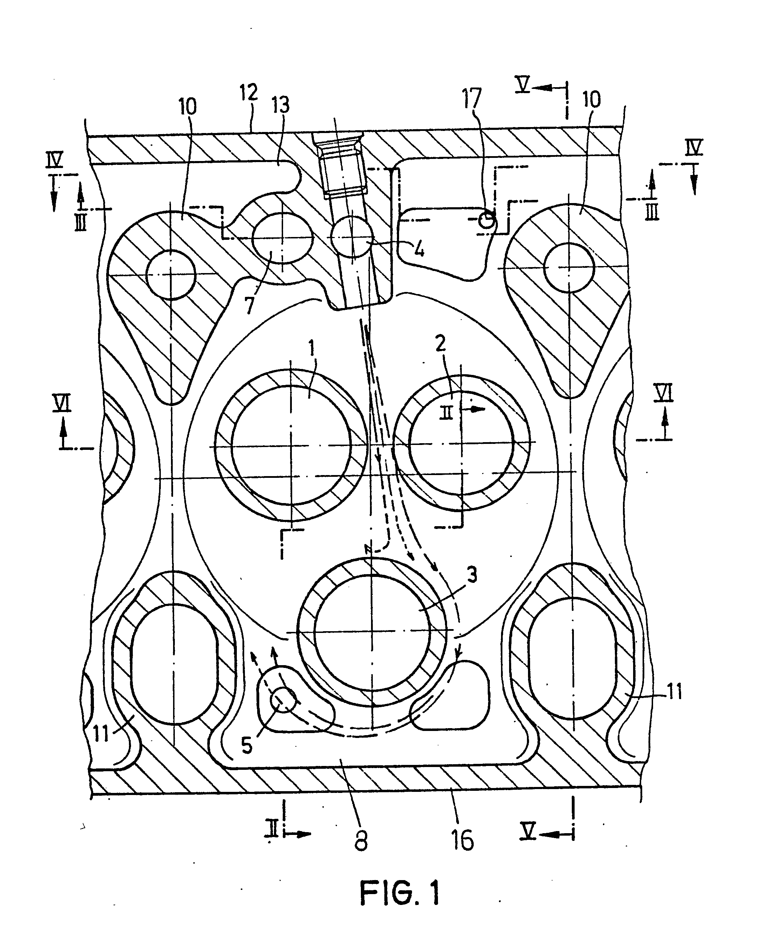

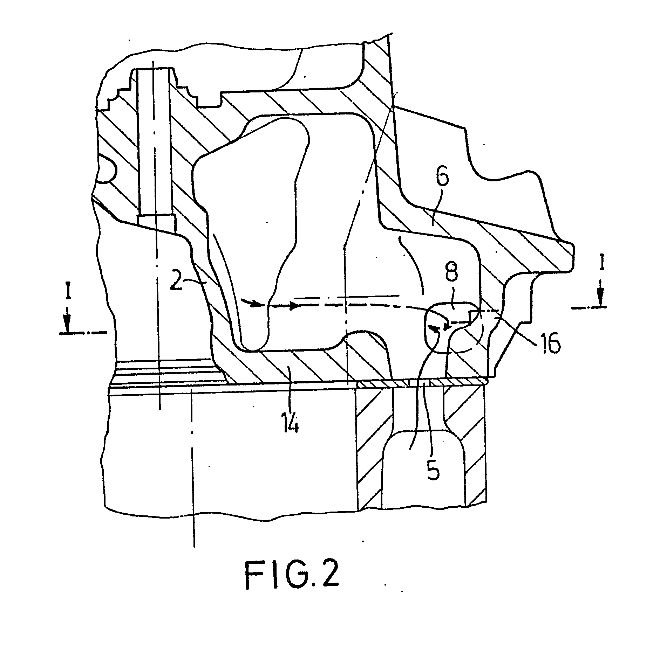

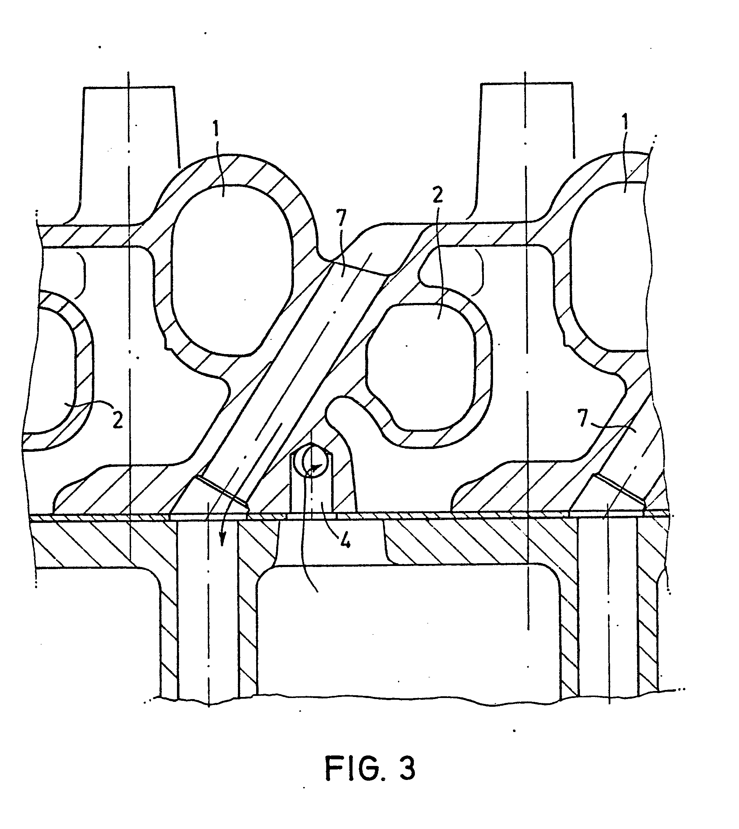

Für die gleichen Bauteile werden in allen Zeichnungen die gleichen Bezugsziffern verwendet. In den Figuren sind Einlasskanäle mit 1, Auslasskanäle mit 2 und Wirbelkammern mit 3 bezeichnet. Durch gestrichelte Pfeile ist der gerichtete Strömungsverlauf vom Hauptwasserübertritt 4 zum Hilfswasserübertritt 5 bzw. zum Durchbruch 8 dargestellt. In den Fig. 1 und 3 ist der düsenartig gestaltete Hauptwasserübertritt 4 deutlich zu erkennen, der die Strömung entlang des Ventilstegs zwischen den Gaswechselkanälen 1 und 2 und um die Wirbelkammer 3 herum erzeugt. Durch eine L-förmig abgesetzte Wand 6 in Verbindung mit dem vorzugsweise an der Zylinderkopfbegrenzungswand 16 etwa in Höhe der Bodenplatte 14 angeordneten Durchbruch 8 wird die Hauptströmung an der Zylinderkopfbodenplatte 14 gehalten, wie der Fig. 2 zu entnehmen ist.

In Fig. 3 ist die schräge Anordnung eines Ölrücklaufkanals 7 zu erkennen, der zwischen dem steil zur Zylinderkopfdichtungsebene geneigten Einlasskanal 1 und dem annähernd waagerecht verlaufenden Auslasskanal 2 angeordnet und mit dem Hauptwasserübertritt 4 verbunden ist.

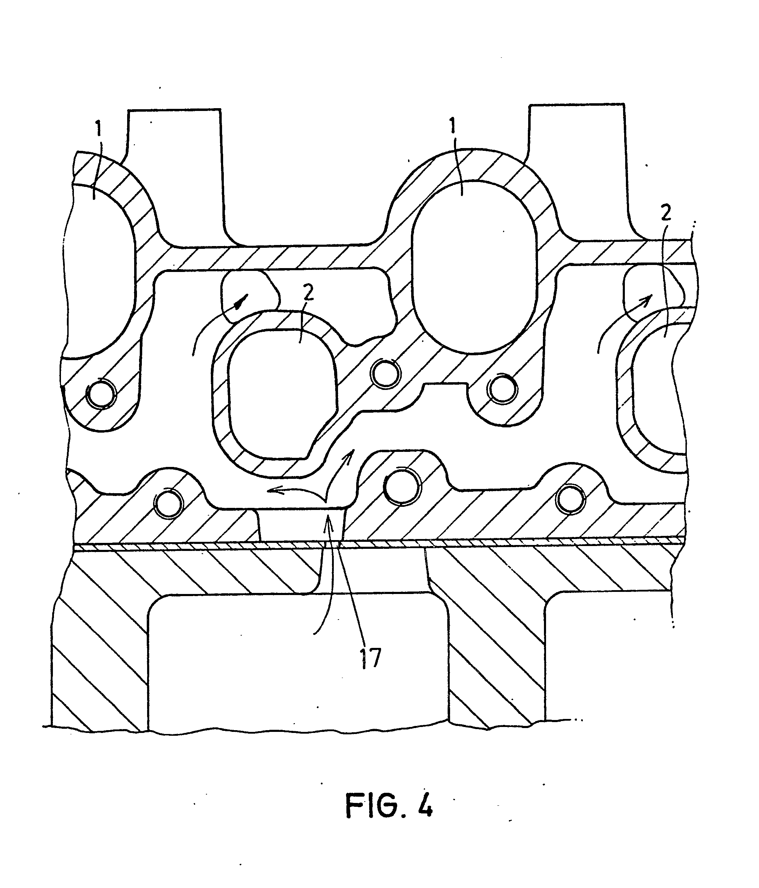

Obwohl die Auslasskanäle 2 fast vollständig von Kühlwasser umspült werden, wie den Fig. 3 und 4 zu entnehmen ist, werden durch die kurze Anbindung an die Ölrücklaufkanäle 7 sowohl die Ölrücklaufkanäle 7 wie auch die Zylinderkopfschraubenpfeifen 10 durch die Auslasskanäle 2 erhitzt. Da die Blockzylinderkopfseitenwand 12 relativ kühl bleiben soll, um die Montage eines Ansaugkrümmers aus Kunststoff zu gestatten, ist zwischen der Blockzylinderkopfseitenwand 12 und den Zylinderkopfschraubenpfeifen 10 bzw. den Ölrücklaufkanälen 7 ein wasserdurchströmter Zwischenraum 13 vorgesehen.

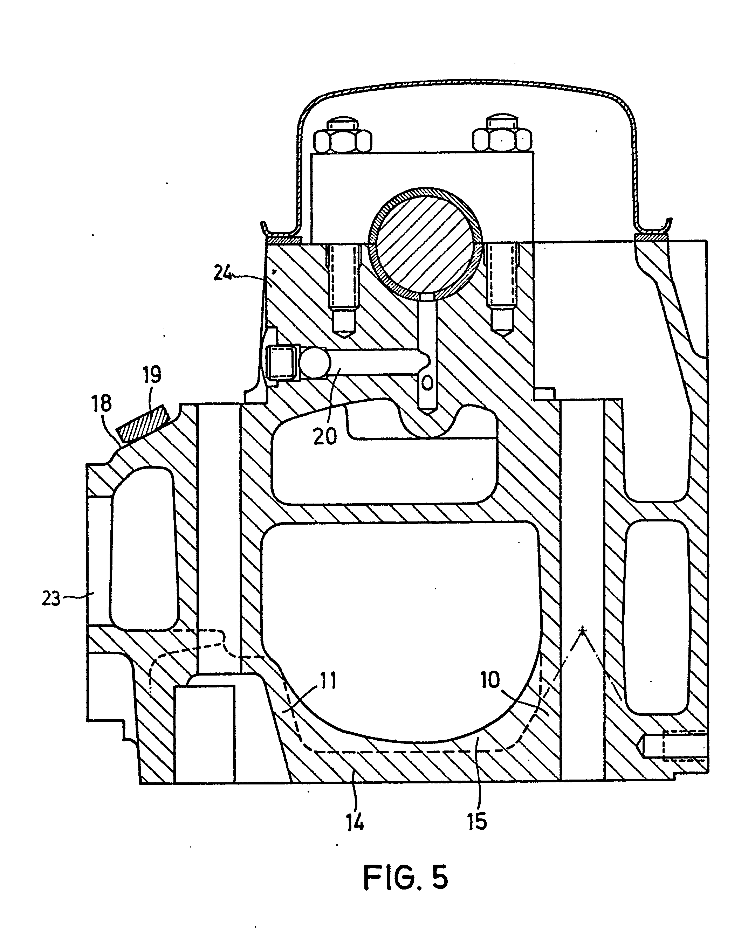

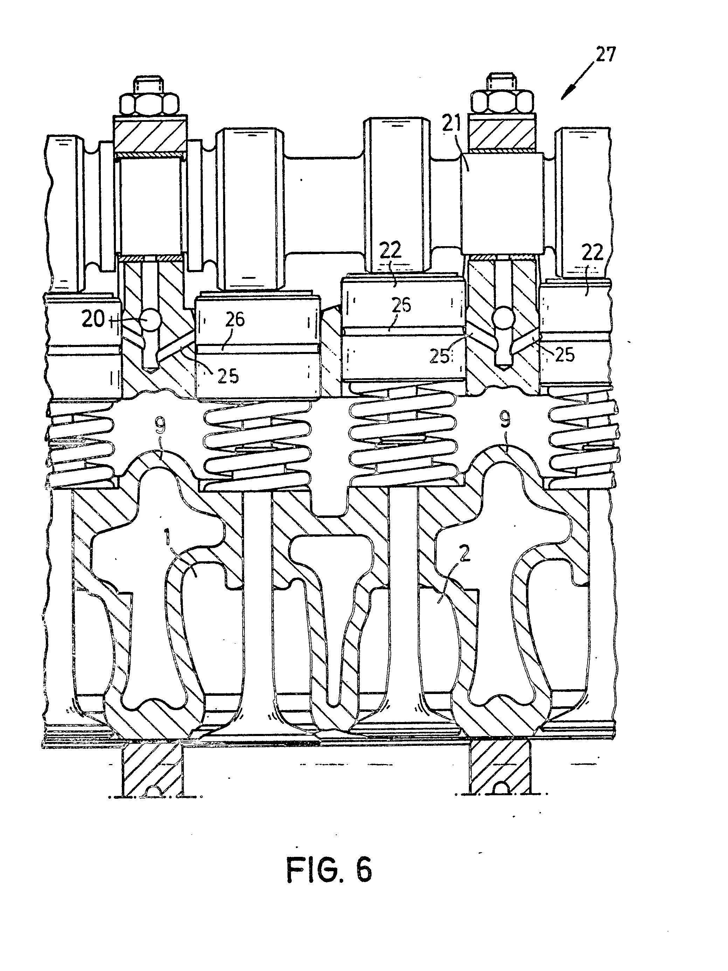

In den Fig. 5 und 6 sind angegossene Lagerböcke 24 für eine obenliegende Nockenwelle 21 im Schnitt dargestellt. Durch die Ölversorgungsbohrung 20 werden sowohl die Nockenwellenlager 27 mit Schmierstoff versorgt, wie auch über die Verzweigungen 25 und die Ringnut 26 die Tassenstössel 22.

Weiter ist in Fig. 5 eine Öffnung 23 dargestellt, deren Randwulst 18 einer zur Düsenhalterbefestigung dienenden Spannpratze 19 als Widerlager dient.

Die erfindungsgemäss zur Erzielung einer höheren Pressung an den Brennraumeinfassungen und einer gleichmässigeren Pressungsverteilung besonders gestalteten Zylinderkopfschraubenpfeifen 10 und 11 sind in den Fig. 1 und 5 zu erkennen. Die Zylinderkopfschraubenpfeifen 10 auf der Seite der Gaswechselkanäle 1 und 2 sind in Richtung der Zylinderkopfbodenplatte 14 im Wasserraum kegelförmig erweitert, während die Zylinderkopfschraubenpfeifen 11 auf der Einspritzseite des Zylinderkopfs an der Zylinderkopfbodenplatte 14 Ausnehmungen aufweisen. Zwischen den Zylindern wird die Zylinderkopfbodenplatte 14 im Wasserraum durch jeweils eine Rippe 15 verstärkt, die gleichförmig an den sich gegenüberliegenden Zylinderkopfschraubenpfeifen 10 und 11 anwächst.

Anordnung und Gestaltung der zur Verbesserung des Dichtungsverhaltens des Zylinderkopfs vorgesehenen Ausgleichsfalten 9 sind in Fig. 6 deutlich zu erkennen.

Der durch die Erfindung bereitgestellte Zylinderkopf ist durch die gezielte Kühlung der als kritisch bekannten Stellen thermisch nicht so hoch belastet wie herkömmliche Zylinderköpfe. Bei gleicher Leistung der Brennkraftmaschine lässt der erfindungsgemässe Zylinderkopf daher eine höhere Lebensdauer erwarten oder lässt bei gleicher Lebensdauer eine Leistungssteigerung der Brennkraftmaschine zu. Weitere Vorteile des erfindungsgemässen Zylinderkopfs liegen in der höheren Pressung an den Brennraumeinfassungen sowie der gleichmässigeren Pressungsverteilung und dem besseren Dichtungsverhalten. Des weiteren wird die durch die Anordnung von Ein- und Auslasskanälen auf einer Zylinderkopfseite hervorgerufene Schwächung der Zylinderkopfbegrenzungswand durch Anordnung und Gestaltung der Ölrücklaufkanäle kompensiert, wodurch gleichzeitig eine bessere Ölrückführung vom Zylinderkopf zum Kurbelgehäuse erreicht wird. Ebenfalls wird durch die Gestaltung der Ölversorgungsbohrung die Schmierung des Ventilbetriebs verbessert. Eine gute Giessbarkeit des erfindungsgemässen Zylinderkopfs als Voraussetzung für eine Grossserienfertigung ist durch die konstruktive Gestaltung sowohl in Grauguss wie auch in Aluminium gegeben.

In dem Ausführungsbeispiel sind die erfindungsgemässen Merkmale an einem Zylinderkopf in Blockbauweise dargestellt; diese Merkmale lassen sich jedoch auch an Zylinderköpfen in Einzelbauweise verwirklichen.

## Patentansprüche

1. Zylinderkopf in Blockbauweise für mehrere Zylinder einer wassergekühlten Brennkraftmaschine mit indirekter oder direkter Einspritzung, der mindestens zwei Gaswechselkanäle (1, 2) pro Zylinder aufweist, die auf der der Wirbelkammer oder Einspritzdüsenpfeife (3) eines Zylinders gegenüberliegenden Seite angeordnet sind, wobei ein Kühlwasserstrom über die Kühlwasserübertritte (4) in den Zylinderkopf geführt und durch den Bereich zwischen den Einlass- und Auslassventilen hindurch auf die Wirbelkammer bzw. Einspritzdüsenpfeife (3) gerichtet ist, wobei die Austrittsöffnung des Kühlwasserstroms im Winkel von ca. 90° zur Zylinderkopfbodenplatte (14) steht und wobei Kühlwasser auf der dem Kühlwasserstrom abgewandten Seite der Wirbelkammer bzw. Einspritzdüsenpfeife (3) in den Zylinderkopf übertritt, dadurch gekennzeichnet, dass für jeden Zylinder ein getrennter Hauptwasserübertritt (4) zwischen den Gaswechselkanälen (1, 2) im Bereich deren Mündungsöffnungen auf einer Blockzylinderkopfseitenwand (12) ·vorgesehen ist und der Kühlwasserstrom als freier Strahl zwischen dem offenen Ventilstegbereich hindurchtritt und aussermittig auf die Wirbelkammer bzw. Einspritzdüsenpfeife (3) gerichtet ist und zumindest ein Teilstrahl um die Wirbelkammer bzw. Einspritzdüsenpfeife (3) herum durch einen zwischen Zylinderkopfbegrenzungswand (16) und Wirbelkammer bzw. Einspritzdüsenpfeife (3) etwa in Höhe der Zylinderkopfbodenplatte (14) angeordneten Durchbruch (8) geführt wird, um hinter diesem Durchbruch mit dem aus dem Hilfswasserübertritt (5) austretenden Kühlwasser zusammenzutreffen, wobei für jeden Zylinder ein Hilfswasserübertritt (5) vorgesehen ist.

2. Zylinderkopf nach Anspruch 1, dadurch gekennzeichnet, dass im Zylinderkopf ein von Kühlwasser durchströmter Kern auf der Einspritzseite des Zylinderkopfs oberhalb des Durchbruchs (8) von einer vorzugsweise L-förmig abgesetzten Zylinderkopfbegrenzungswand (16, 6) nach oben hin begrenzt ist (Fig. 2).

3. Zylinderkopf nach Anspruch 1 oder 2, dadurch gekennzeichnet, dass die Gaswechselkanäle (1, 2) derart steil zur Zylinderkopfdichtungsebene angeordnet sind, dass jeweils zwischen einem Einlasskanal (1) und dem entsprechenden, annähernd waagerecht angeordneten Auslasskanal (2) ein vom Querschnitt ausreichend bemessener Raum zur Aufnahme eines gegossenen oder gebohrten Ölrücklaufkanals (7) gegeben ist (Fig. 3).

4. Zylinderkopf nach einem der Ansprüche 1 bis 3, dadurch gekennzeichnet, dass die Ölrücklaufkanäle (7) schräg angeordnet und tangential an die Auslasskanäle (2) angebunden sind, und dass die Auslasskanäle (2) mit Ausnahme der kurzen tangentialen Anbindung an ihrer gesamten Oerfläche von Kühlwasser umspült sind (Fig. 3).

5. Zylinderkopf nach Anspruch 4, dadurch gekennzeichnet, dass die an die Auslasskanäle (2) angebundenen Ölrücklaufkanäle (7) mit den Hauptwasserübertritten (4) derart verbunden sind, dass sie jeweils eine Einheit bilden, die Abstützfunktionen übernimmt und die auf die Zylinderkopfbodenplatte (14) wirkenden Gaskräfte in Richtung Zylinderkopfschrauben bzw. Zylinderkopfschraubenpfeifen (10) ableitet.

6. Zylinderkopf nach einem der Ansprüche 1 bis 5, dadurch gekennzeichnet, dass zwischen den Ölrücklaufkanälen (7) und den Zylinderkopfschraubenpfeifen (10) einerseits und der Blockzylinderkopfseitenwand (12) andererseits wasserdurchströmte Zwischenräume (13) vorgesehen sind, die durch zusätzliche auf der Seite der Hauptwasserübertritte (4) angeordnete Hilfswasserübertritte (17) mit Kühlwasser beschickt sind (Fig.1).

7. Zylinderkopf nach einem der Ansprüche 1 bis 6, dadurch gekennzeichnet, dass die geneigten Einlasskanäle (1) so weit in den Ventilfeder- und Stösselraum hineinragen, dass sie diesen in Einzelräume unterteilen.

8. Zylinderkopf nach einem der Ansprüche 1 bis 7, dadurch gekennzeichnet, dass an den Zylinderkopf Lagerböcke (24) für eine obenliegende Nockenwelle (21) angegossen sind und die Lagerböcke (24) jeweils separate Ölversorgungsbohrungen (20) aufweisen, über die benachbarte mechanische oder hydraulische Tassenstössel (22) ebenfalls mit Schmierstoff versorgt sind (Fig. 5, 6).

9. Zylinderkopf nach einem der Ansprüche 1 bis 8, dadurch gekennzeichnet, dass die Schraubenpfeifen (11) der Zylinderkopfschrauben auf der Einspritzseite des Zylinderkopfs an der Zylinderkopfbodenplatte (14) Ausnehmungen aufweisen, dass die Schraubenpfeifen (10) der Zylinderkopfschrauben auf der Seite der Gaswechselkanäle (1, 2) zur Zylinderkopfbodenplatte (14) hin im Wasserraum kegelförmig erweitert sind und die Bodenplatte (14) des Zylinderkopfs zwischen den Zylindern im Wasserraum durch an zwei gegenüberliegende Schraubenpfeifen (10, 11) gleichförmig anwachsende Rippen bzw. Wulste (15) versteift ist (Fig. 5).

10. Zylinderkopf nach einem der Ansprüche 1 bis 9, dadurch gekennzeichnet, dass im Ventilfeder- und Stösselraum zwischen den einzelnen Zylindern quer zum Zylinderkopf verlaufende Ausgleichsfalten (9) vorgesehen sind (Fig. 6).

11. Zylinderkopf nach einem der Ansprüche 1 bis 10, dadurch gekennzeichnet, dass im Bereich des Wasserraums durch Funktion und/oder den Giessprozess bedingte Öffnungen (23) des Zylinderkopfs einen Randwulst (18) aufweisen, der als Widerlager für Spannpratzen (19) zur Düsenhalterbefestigung dient.

## Claims

1. A cylinder head of unitary construction for a plurality of cylinders of a water-cooled combustion engine with indirect or direkt injection, which head comprises at least two gas exchange passages (1, 2) per cylinder which are arranged on the side opposite to the whirl chamber or injection nozzle pipe (3) of the cylinder, with a cooling water stream being conducted by way of cooling water overflows (4) into the cylinder head and being directed through the region between the inlet and exhaust valves on to the whirl chamber or injection nozzle pipe (3), the outlet opening of the cooling medium stream being disposed at an angle of about 90° to the cylinder head bottom plate (14), and cooling water passing into the cylinder head on the side of the whirl chamber or injection nozzle pipe (3) remote from the cooling water stream, characterised in that a separate main water overflow (4) is provided for each cylinder between the gas exchange passages (1, 2) in the region of their mouth openings on a block cylinder head side wall (12), and the cooling water stream passes as a free jet between the open valve bridge region and is directed eccentrically on to the whirl chamber or injection nozzle pipe (3) with at least part of the jet being conducted around the whirl chamber or injection nozzle pipe (3) through a bore (8) arrenged between a cylinder head-defining wall (16) and the whirl chamber or injection nozzle pipe (3) at approximately the level of the cylinder head bottom plate (14) in order to meet behind this bore with the cooling water emerging from the auxiliary water overflow (5), an auxiliary water overflow (5) being provided for each cylinder.

2. A cylinder head according to Claim 1, characterised in that, in the cylinder head, a core through which cooling water flows is upwardly limited on the injection side of the cylinder head above the bore (8) by a cylinder head defining wall (16, 6), preferably of stepped L-form (Figure 2).

3. A cylinder head according to Claim 1 or 2, characterised in that the gas exchange passages (1, 2) are arranged steeply in relation to the cylinder head gasket plane in such a way that, in each case between an inlet passage (1) and the corresponding, approximately horizontally-arranged exhaust passage (2), there is a space of adequate cross-sectional dimensions for the reception of a cast or drilled oil return passage (7) (Figure 3).

4. A cylinder head according to any one of Claims 1 to 3, characterised in that the oil return passages (7) are arranged obliquely and connect tangentially to the exhaust passages (2), and in that the exhaust passages (2), with the exception of the short tangential connections, are washed around by cooling water over their entire surface (Figure 3).

5. A cylinder head according to claim 4, characterised in that the oil return passages (7) connected to the exhaust passages (2) are connected with the main water overflows (4) in such a way that they each form a unit which provides a supporting function and conducts the gas forces acting upon the cylinder head bottom plate (14) away in the direction of the cylinder head screws and/or cylinder head screw pipes (10).

6. A cylinder head according to any one of Claims 1 to 5, characterised in that, between the oil return passages (7) and the cylinder head screw pipes (10) on the one side and the cylinder head side wall (12) on the other side there are provided interspaces (13) through which water flows and which are charged with cooling water through additional auxiliary water overflows (17) arranged on the side of the main water overflows (4) (Figure 1).

7. A cylinder head according to any one of Claims 1 to 6, characterised in that the inclined inlet passages (1) protrude so far into the valve spring and push rod space that they divide this space into individual spaces.

8. A cylinder head according to any one of Claims 1 to 7, characterised in that bearing pedestals (24) for an overhead cam shaft (21) are cast on to the cylinder head, and the bearing pedestals (24) each have separate oil supply bores (20) by way of which adjacent mechanical or hydraulic cup push rods (22) are likewise supplied with lubricant (Figures 5, 6).

9. A cylinder head according to any one of Claims 1 to 8, characterised in that the screw pipes (11) of the cylinder head screws on the injection side of the cylinder head have recesses on the cylinder head bottom plate (14), in that the screw pipes (10) of the cylinder head screws, on the side of the gas exchange passages (1,2), are widened in conical form towards the cylinder head bottom plate (14) in the water space, and the bottom plate (14) of the cylinder head is stiffend in the water space by two ribs or beads (15) growing uniformly on two opposite screws pipes (10, 11) (Figure 5).

10. A cylinder head according to any one of Claims 1 to 9, characterised in that, in the valve spring and push rod space between individual cylinders, there are provided compensation folds (9) extending transversely of the cylinder head (Figure 6).

11. A cylinder head according to any one of Claims 1 to 10, characterised in that, in the region of the water space openings (23) arising out of the function and/or the casting process of the cylinder head, there is a marginal bead (18) which serves as an abutment for clamping shoes (19) for securing the nozzle holders.

## Revendications

1. Culasse à construction en bloc pour des moteurs à combustion interne à plusieurs cylindres, à refroidissement par eau, avec injection indirecte ou directe, comportant au moins deux canaux d'échange de gaz (1, 2) par cylindre, qui sont prévus du côté opposé de la chambre de tourbillonnement ou du passage de la buse d'injection (3) du cylindre, un écoulement d'eau de refroidissement étant guidé dans la culasse par un passage d'eau de refroidissement (4), et étant dirigé à travers la zone comprise entre les soupapes d'admission et les soupapes d'échappement, en direction de la chambre de tourbillonnement ou du passage (3) de la buse d'injection, l'orifice de sortie de la veine d'agent de refroidissement faisant un angle d'environ 90° par rapport à la plaque (14) de la culasse, et l'eau de refroidissement passant dans la culasse du côté opposé de la chambre de tourbillonnement ou du passage (3) de la buse d'injection, caractérisée en ce que pour chaque cylindre, il est prévu un passage principal d'eau (4), distinct entre les canaux d'échange de gaz (1, 2) au niveau de leurs orifices dans une paroi latérale du bloc-culasse (12) et la veine d'eau de refroidissement traverse comme jet libre la zone comprise entre l'entretoise de soupape en étant dirigée de façon excentrée sur la chambre de tourbillonnement ou le passage (3) de la buse d'injection, et au moins une partie du jet tourne autour de la chambre de tourbillonnement ou du passage (3) de la buse d'injection en passant par un passage (8) entre la paroi de limitation (16) de la culasse et la chambre de tourbillonnement ou le passage (3) de la buse d'injection, sensiblement à hauteur de la plaque de fond (14) de la culasse, pour rencontrer derrière ce passage, l'eau de refroidissement qui arrive du passage auxiliaire d'eau (5), un passage auxiliaire d'eau (5) étant prévu pour chaque cylindre.

2. Culasse selon la revendication 1, caractérisée en ce que dans la culasse, un noyau parcouru par l'eau de refroidissement, est délimité vers le haut du côté de l'injection de la culasse, au-dessus du passage (8) par une paroi de limitation de culasse (16, 6), décalée de préférence en forme de L (figure 2).

3. Culasse selon la revendication 1 ou 2, caractérisée en ce que les canaux d'échange de gaz (1, 2) sont inclinés par rapport au plan d'étanchéité de la culasse de façon que chaque fois entre un canal d'alimentation (1) et le canal d'échappement (2), correspondants, prévus pratiquement horizontalement, il y ait un volume qui, sur le plan de la section, est suffisant pour recevoir un canal de retour d'huile (7), réalisé par coulée ou par perçage (figure 3).

4. Culasse selon l'une des revendications 1 à 3, caractérisée en ce que les cannaux de retour d'huile (7) sont inclinés, et sont tangents aux canaux d'échappement (2), et en ce que les canaux d'échappement (2) ont leur surface extérieure baignée par l'eau de refroidissement à l'exception de la courte jonction tangentielle (figure 3).

5. Culasse selon la revendication 4, caractérisée en ce que les canaux de retour d'huile (7) reliés aux canaux d'échappement (2) sont reliés aux passages principaux d'eau (4) de façon à former chaque fois un ensemble qui assure les fonctions d'appui et dévie les efforts exercés par les gaz sur la plaque de fond (14) de la culasse, en direction des vis de la culasse ou des passages (10) recevant les vis de la culasse.

6. Culasse selon l'une des revendications 1 à 5, caractérisée en ce qu'entre les canaux de retour d'huile (7) et d'une part les passages de vis (10) de la culasse et d'autre part la paroi (12) du bloc de la culasse, il y a des volumes intermédiaires (13) parcourus par l'eau, qui sont alimentés en eau de refroidissement (figure 1) par des passages auxiliaires d'eau (17), prévus en plus sur le côté des passages principaux d'eau (4) (figure 1).

7. Culasse selon l'une des revendications 1 à 6, caractérisée en ce que les canaux d'alimentation (1), inclinés, pénètrent dans le volume des tiges de soupape et des ressorts de soupape de façon à subdiviser ce volume en des volumes distincts.

8. Culasse selon l'une des revendications 1 à 7, caractérisée en ce que des blocs de palier (24) pour un arbre à came (21) disposé en partie haute sont coulés dans la culasse, et les blocs de palier (24) présentent des perçages d'alimentation d'huile (20), respectifs, distincts, qui alimentent également en lubrifiant les poussoirs en forme de boisseaux (22), voisins, hydrauliques ou mécaniques (figures 5, 6).

9. Culasse selon l'une des revendications 1 à 8, caractérisée en ce que les cuvettes (11) des vis de la culasse comportent du côté d'injection de la culasse, des cavités au niveau de la plaque de fond (14) de la culasse, en ce que les cuvettes (10) de vis de culasse viennent en saillie en forme de tronc de cône dans le volume d'eau, du côté des canaux d'échange de gaz (1, 2) en direction de la plaque de fond (14) de la culasse en s'élargissant, et la plaque de fond (14) de la culasse est renforcée entre les cylindres dans le volume d'eau par des nervures ou bourrelets (15), qui se développent de même forme sur deux cuvettes à vis (10, 11) opposées (figure 5).

10. Culasse selon l'une des revendications 1 à 9, caractérisée en ce que des pliures de compensation (9) sont prévues dans le volume des poussoirs et des ressorts de soupape, entre les différents cylindres, transversalement à la tête de cylindre (figure 6).

11. Culasse selon l'une des revendications 1 à 10, caractérisée en ce qu'au niveau de la chambre d'eau, les ouvertures (23) de la culasse, ouvertures nécessaires sur le plan fonctionnel et/ou du fait du procédé de coulée, présentent un bourrelet (18) qui sert d'appui pour les griffes de serrage (19) pour la fixation des buses.

FIG. 1

FIG.2

FIG. 3

FIG. 4

FIG. 5

FIG. 6